# EUROPEAN PATENT SPECIFICATION

(11) **EP 1 438 490 B1**
(45) Date of publication and mention of the grant of the patent: **13.09.2006**
(21) Application number: 02798871.6
(22) Date of filing: 11.09.2002
(51) Int. Cl.: F01N 3/035

(54) **HOUSING ARRANGED IN AN EXHAUST GAS SYSTEM FOR A COMBUSTION ENGINE**
IN EINEM ABGASSYSTEM FÜR EINEN VERBRENNUNGSMOTOR ANGEORDNETES GEHÄUSE
ENCEINTE MONTEE DANS LE SYSTEME D'ECHAPPEMENT D'UN MOTEUR A COMBUSTION

(30) Priority: 14.09.2001 SE 0103059
(43) Date of publication of application: 21.07.2004
(73) Proprietor: Scania CV AB (publ), 151 87 Södertälje (SE)
(72) Inventor: GLAV, Ragnar, S-186 50 Vallentuna (SE); LINDEN, Michael, S-152 57 Södertälje (SE)
(86) International application number: PCT/SE2002/001629
(87) International publication number: WO 2003/025357

(56) References cited:
- EP-A2- 1 158 144
- WO-A1-01/04466
- DE-A1- 19 955 013
- GB-A- 408 612

## Description

### BACKGROUND TO THE INVENTION, AND STATE OF THE ART

The invention relates to a converter device intended to be arranged in an exhaust system for a combustion engine according to the preamble of claim 1 (e.g. WO 01/04466 A1).

The coming years will see the introduction, in Europe at least, of increasingly restrictive requirements regarding the release of emissions from diesel-powered vehicles, and other types of combustion engines than diesel engines are also being subjected to increasingly severe requirements for effective exhaust cleaning. To be able to meet these emission requirements, exhaust systems of diesel-powered vehicles are being equipped with catalysts whose effects include reducing the amount of nitrogen oxides in exhaust gases, and with particle filters which reduce the amount of soot particles in exhaust gases.

The increasingly restrictive nitrogen oxide and soot particle release requirements will be introduced gradually while, at the same time, acceptable emission levels for vehicles powered by combustion engines will clearly vary between different countries. In addition, the capacity of components which reduce exhaust gases has to be adapted according to the type and size of combustion engine. This means that in principle each individual vehicle has to be provided with different combinations of exhaust cleaning components with differing capacities. Converter devices which incorporate exhaust cleaning components and other necessary components, e.g. noise damping, have therefore to be adapted and to be designed substantially individually so that different combinations of exhaust cleaning components with differing capacities can be fitted. The manufacturing and fitting costs of such converter devices will therefore be high.

### SUMMARY OF THE INVENTION

The object of the present invention is to provide a converter device so constructed as to allow the fitting of exhaust cleaning components such as, inter alia, particle filters and catalytic cleaners in various combinations and various sizes.

The aforesaid object is achieved with the device mentioned in the introduction which is characterised by what is indicated in the characterising part of claim 1. Exhaust cleaning components usually have a capacity which is related to the volume occupied by the component. Modules of various sizes incorporating, for example, exhaust cleaning components thus exhibit, according to the invention, an identical cross-sectional area in one plane but a different extent in a direction perpendicular to said plane. In such cases, the extent of a module in a direction perpendicular to said plane thus determines the capacity of the exhaust cleaning component. The converter device may therefore comprise a space with a cross-sectional area in said plane which substantially corresponds to that of the module. The space has an extent perpendicular to said plane such that a module of maximum size can be accommodated in the space. Modules of smaller than maximum size may therefore also be fitted in the space with suitable fastening means.

According to a preferred embodiment of the invention, the various sizes of module exhibit a cross-sectional profile which corresponds substantially to a surface which extends in a radial direction between the casing and the tubular body in said plane. With advantage, the tubular body is arranged centrally in the converter device. This enables the module to exhibit a symmetrical cross-sectional profile which is preferably annular in said plane, and to be fitted in a space round the tubular body. In such cases, a module which incorporates an exhaust cleaning component cleans exhaust gases which flow externally about the tubular body. Alternatively, the various sizes of modules exhibit a cross-sectional profile which corresponds substantially to an internal surface of the tubular body in said plane. This means that the module may exhibit a symmetrical cross-sectional profile which preferably has a circular shape in said plane so that it can be fitted in a space within the tubular body. In this case, a module which incorporates an exhaust cleaning component cleans exhaust gases which flow inside the tubular body. The module may incorporate an exhaust cleaning component in the form of a particle filter. Arranging a particle filter in an exhaust system of a diesel engine is necessary in many cases where the amount of soot particles in exhaust gases has to be reduced to an acceptable emission level. The module may incorporate an exhaust cleaning component in the form of a catalytic cleaner to reduce the amount of nitrogen oxides in the exhaust gases. With advantage, both a module with a particle filter and a module with a catalytic cleaner are arranged in the converter device. Advantageously, the module which incorporates the particle filter is situated outermost and the module which incorporates the catalytic cleaner is situated internally. Such positioning has several advantages, e.g. it makes it relatively easy to fit the constituent modules in the converter, it facilitates the design of an exhaust path which allows effective noise damping, and it facilitates the arrangement of any burner intended, as necessary, to raise the temperature of exhaust gases before they reach the particle filter. For soot particles in exhaust gases to ignite and burn in the particle filter, the exhaust gases need to have reached a specific temperature. A burner can supplement an oxidising catalytic cleaner arranged within the particle filter in the exhaust flow direction. Such an oxidising catalytic cleaner converts various kinds of nitrogen oxides NOₓ to nitrogen dioxide NO₂. This means that soot combustion thereafter can start at about 225°C in the particle filter.

According to another preferred embodiment of the present invention, the converter device comprises a basic module which incorporates the tubular body and at least part of the casing. The casing and the tubular body have predetermined dimensions in said cross-sectional plane so that the various sizes of modules can be arranged round or in the tubular body of the basic module. The module may be arranged movably in a space of the basic module so that a first side of the module will abut against a stop surface, after which a locking means is designed to be arranged on the other side of the module. This makes the module easy to fit and remove. Such a locking means may be a metal seal.

According to another preferred embodiment of the present invention, the module incorporates a noise damping component which incorporates a helical flow path for exhaust gases. Such a helical flow path allows a longer exhaust flow distance than a straight line between an inlet and an outlet of the flow path. The module which incorporates the noise damping component is advantageously arranged externally about the tubular body. As the tubular body usually has a relatively large cross-sectional surface to guide the exhaust gases, the result in this case is a helical flow path which is considerably longer than a rectilinear distance between an inlet and an outlet of the flow path. The helical flow path extends between a first space and a second space of the passage and provides, owing to its length, effective damping of low-frequency engine noise. The module with the noise damping component preferably incorporates at least one helical profile which has a radial extent between an inner wall surface intended to be arranged round the tubular body and an outer wall surface intended to form part of the casing. This means that the whole volume of the converter device externally about the tubular body is used for guiding the exhaust gases in said flow path. Advantageously, the tubular body is placed centrally in the converter device so that the radial distance between the casing and the tubular body is constant along the extent of the flow path.

According to another preferred embodiment of the present invention, the casing incorporates at least one endwall which is arranged releasably. A releasable endwall makes it easy to open the converter device so that the modules which incorporate the noise damping component and the constituent exhaust cleaning components can easily be fitted and removed. It has for example to be possible for the particle filter to be taken out and turned over and emptied of ash once or twice a year. The module which incorporates the noise damping components and the endwall is, for example, fastened releasably by means of a clamping strap.

### BRIEF DESCRIPTION OF THE DRAWINGS

Preferred embodiments of the invention are described below by way of examples with reference to the attached drawings, in which:
- Fig. 1: depicts a converter device according to an embodiment of the present invention,
- Fig. 2: depicts a sectional view along the line A-A in Fig. 1,
- Fig. 3: depicts an inlet to a converter device according to the present invention,
- Fig. 4: depicts a combined unit incorporating a particle filter and a catalytic cleaner at a first stage of manufacture,
- Fig. 5: depicts the combined unit at a later stage of manufacture and
- Fig. 6: depicts a sectional view through an alternative embodiment of a converter device.

### DETAILED DESCRIPTION OF PREFERRED EMBODIMENTS OF THE INVENTION

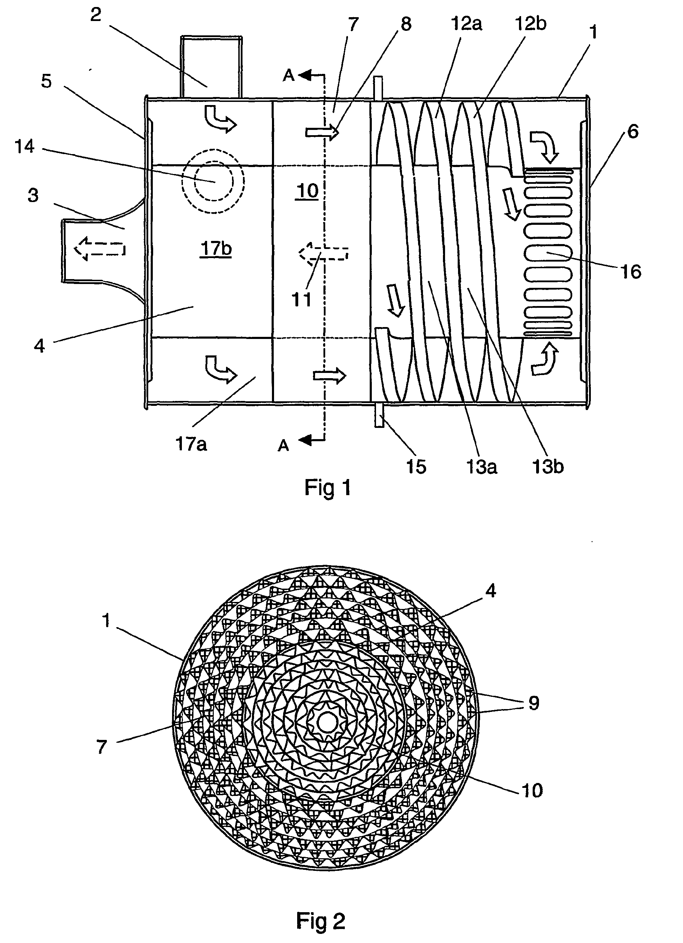

Fig. 1 depicts a converter device intended to be arranged in an exhaust system for a diesel-powered vehicle. The converter device incorporates an external casing 1 which has a substantially cylindrical shape. In Fig. 1, the portion of the casing 1 which faces the observer has been removed to show the items arranged inside the casing 1. The casing 1 forms a closed external surface except at the points where an inlet 2 and an outlet 3 are arranged for exhaust gases. A pipe 4 of circular cross-section which has a smaller diameter than the diameter of the casing 1 is arranged inside the casing 1 so that a central axis in an axial direction through the casing 1 and the pipe 4 coincide. The pipe 4 has a length corresponding to the casing 1 and the ends of the pipe 4 abut against first and second endwalls 5 and 6 respectively of the casing 1.

The converter device incorporates exhaust cleaning components to clean exhaust gases which flow through a passage which extends between the inlet 2 and the outlet 3. A first exhaust cleaning component in the form of a particle filter 7 is arranged externally about the pipe 4. Fig. 2 depicts a sectional view along the line A-A in Fig. 1. In the plane A illustrated in Fig. 2, the particle filter 7 is shown stretching annularly round the pipe 4. The particle filter 7 has a radial extent such that it entirely fills the radial space between the pipe 4 and the casing 1. The particle filter 7 incorporates elongate ducts which have an extent in a first direction 8. The elongate ducts are intended to lead the exhaust gases through the filter 7. The particle filter has a constant cross-sectional shape in the direction of flow of the exhaust gases, which are therefore led substantially in the first direction 8 through the particle filter 7. The particle filter 7 incorporates stop surfaces 9 arranged at appropriate points along the extent of the elongate ducts. The stop surfaces 9 cause the exhaust gases to be led into adjacent elongate channels in the particle filter. Soot particles are thereby caught and burnt in the particle filter 7. A second exhaust cleaning component in the form of a catalytic cleaner 10 is arranged inside the pipe 4. The catalytic cleaner 10 is arranged radially within the particle filter 7 in the plane A depicted in Fig. 2. The catalytic cleaner 10 also incorporates elongate ducts designed to lead the exhaust gases in a substantially second direction 11 through the catalytic cleaner 10. The catalytic cleaner 10 has a constant cross-sectional shape in the exhaust gas flow direction 11. The catalytic cleaner 10 is intended to effect catalytic cleaning of the exhaust gases, particularly in order to reduce the nitrogen oxides content of the exhaust gases passing through.

A basic principle for damping low-frequency noise is to create a long exhaust route between two spaces. An effective low-frequency noise damper in which such an exhaust route is straight occupies a great deal of space. Low-frequency noise is the predominant portion of the noise from a combustion engine. The converter device incorporates noise damping means designed according to this basic principle. The converter device thus incorporates two elongate profiled sections 12a, b which extend helically round the pipe 4. The sections 12a, b have a radial extent such that they fill the radial space between the pipe 4 and the casing 1. In this case, each of the sections 12a, b extends for about 600° round the pipe 4. The two sections 12a, b form between them two helical parallel flow paths 13a, b whose inlet and outlet are offset 180° from one another. The flow paths 13a, b thus extend likewise helically round the pipe 4 in the radial space enclosed by the casing 1 and the pipe 4. The exhaust gases led through said helical flow paths 13a, b travel a considerably longer distance than the length of a straight line between the inlet and outlet of the flow paths 13a, b. The space in the passage upstream from the helical flow paths 13a, b forms a first space, and the space downstream from said flow paths to the catalytic cleaner 10 forms a second space. Leading the exhaust gases via said helical flow paths 13a, b creates a long exhaust route which does not need an elongate converter device in order to allow effective noise damping. The converter device which thus contains both exhaust cleaning components and noise damping components can therefore be made very compact and require little space.

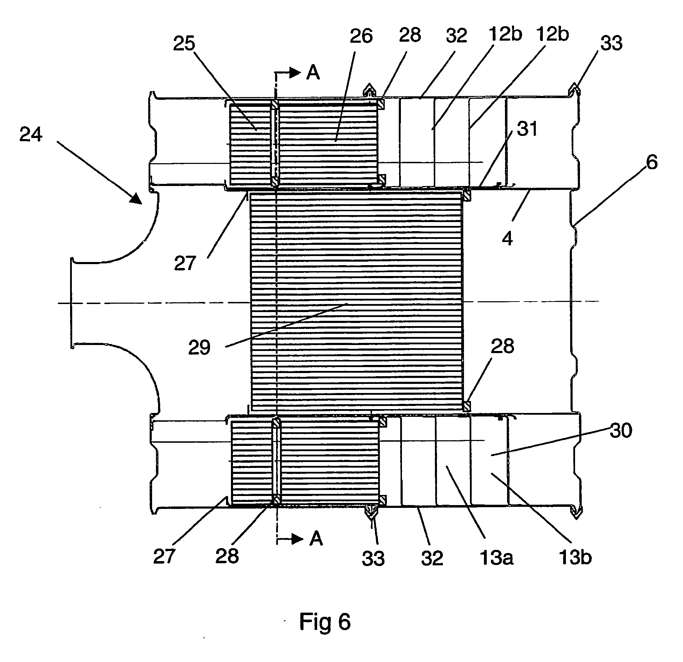

A burner 14 is arranged in the vicinity of the inlet 2 in the converter device. The purpose of the burner 14 is, when necessary, to heat the exhaust gases to a temperature such that soot particles can be burnt in the particle filter 7. Soot particles normally ignite at a temperature of about 600°C but in most cases it is difficult to guarantee such a high exhaust temperature even with a high-performance burner 14. The ignition temperature of soot particles has therefore usually to be lowered. This may be achieved by converting the various types of nitrogen oxides NOₓ arising to nitrogen dioxide NO₂. There are basically two methods for doing so. According to a first method, CRT (Continuous Regeneration Trap), a separate oxidising catalytic cleaner is arranged for the purpose before the particle filter 7 in the exhaust gas flow direction (see Fig. 6). In this situation, soot particles ignite at about 225°C in the particle filter 7. According to a second method, CSF (Catalytic Soot Filter), the particle filter 7 is lined with a suitable lining material so that the oxidising catalysis from NOₓ to NO₂ takes place directly on the surface of the particle filter 7. In this situation, soot particles ignite at about 250°C. It is also possible by means of various additives in the fuel to obtain a lowered ignition temperature of about 350°C in a conventional particle filter 7.

In cases where a catalytic cleaner 10 which works by SCR (Selective Catalytic Reduction) is used, injection devices 15 are arranged at the periphery of the converter 1 to add an ammonia carrier substance, e.g. in the form of urea. When the ammonia carrier has been added, it has to be properly mixed in to optimise the performance of the catalytic cleaner 10 in reducing to nitrogen gas and water the ammonia and nitrogen oxide content of the exhaust gases passing through. With the elongate flow paths 13a, b, this is no problem.

The pipe 4 incorporates at the end which abuts against the second endwall 6 a multiplicity of holes 16 which are elliptical in shape. The holes 16 are arranged at substantially constant spacings round the periphery of the pipe 4. The holes 16 are well-proportioned in both number and size. The holes 16 therefore allow the exhaust gases to flow into the pipe 4 with relatively low flow losses. The holes allow flow in the passage from a first part-route 17a arranged externally about the tube 4 to a second part-route 17b arranged inside the pipe 4.

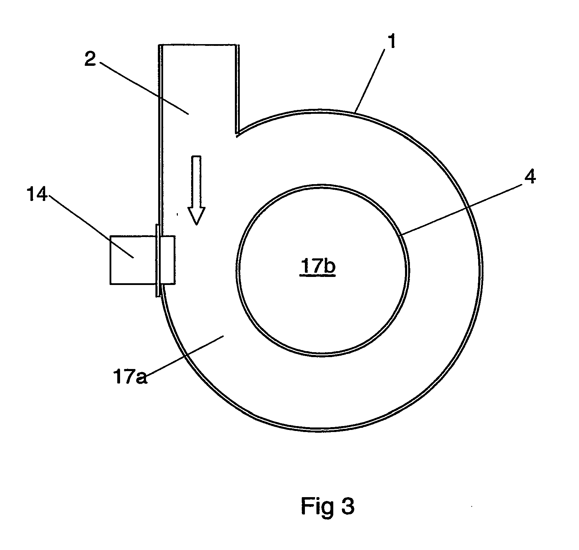

The exhaust gases are led into the converter device via the inlet 2. Fig. 3 depicts a sectional view through the converter device at the inlet 2. The exhaust gases are led from the inlet 2 into a substantially annular space of the first part-route 17a, which annular space extends round the pipe 4 in the vicinity of the first endwall 5 of the casing 1. The annular space of the first part-route 17a affords relatively little flow resistance to the exhaust gases flowing in and imparts to the exhaust gases a substantially even distribution before they are led on in an axial direction relative to the pipe 4 and into the particle filter 7. The exhaust gases flowing in are heated as necessary by the burner 14 to a temperature such as to guarantee ignition and combustion of soot particles in the exhaust gases in the particle filter 7. The exhaust gases are led in the first direction 8 through the elongate ducts of the particle filter 7. Stop surfaces 9 are thus arranged at suitable points along the elongate ducts and force the exhaust gases into adjacent elongate ducts in the particle filter 7. Depending on the regenerating system and the temperature, the soot particles caught at this stage in the particle filter 7 ignite and burn. The exhaust gases are thus forced to deviate a shorter distance sideways but they mainly flow in the first direction 8 along a substantially straight line through the particle filter 7. The exhaust gases flowing out of the filter 7 have in principle been cleared of soot particles.

Injection devices 15 are used to add a substance in the form of an ammonia carrier to the exhaust gases flowing from the particle filter 7 before these exhaust gases are led on into one of the two parallel flow paths 13a, b formed by the helical sections 12a, b which extend round the pipe 4. The two flow paths 13a, b are offset 180° from one another so as to obtain a substantially even distribution of exhaust gases between the two flow paths 13a, b. The sections 12a, b have a radial extent such that they fill the space between the pipe 4 and the casing 1. The exhaust gases led through the helical flow paths 13a, b travel a considerably longer distance than the length of a straight line between the inlet and outlet of the flow paths 13a, b. The result is an elongate exhaust route connecting two spaces of the passage so as to obtain effective noise damping of low-frequency noise from the diesel engine. The elongate flow paths 13a, b also provide a necessary mixing distance for the ammonia carrier so that the latter becomes distributed substantially uniformly in the exhaust gases. The exhaust gases are subject to relatively slight changes of direction as they pass through the helical flow paths 13a, b, thereby causing little flow resistance to the exhaust gases. The exhaust gases flowing out from the helical paths are led radially inwards and into the pipe 4 via the holes 16. The holes 16 define a transition between the passage's first part-route 17a externally about the pipe 4 and the passage's second part-route inside the pipe 4. The passage through the holes 16 changes the direction of flow of the exhaust gases and leads them towards the catalytic cleaner 10. When the exhaust gases flowing inside the pipe 4 reach the catalytic cleaner 10, they flow into the latter's elongate ducts. The elongate ducts allow the exhaust gases to flow in the second flow direction 11 which is parallel with, but in the opposite direction to, the first flow direction 8. In the catalytic cleaner 10, the nitrogen oxides and ammonia content of the exhaust gases is reduced to nitrogen gas and water. Thereafter the exhaust gases substantially cleared of soot particles and nitrogen oxides flow out through the outlet 3. The outlet 3 incorporates a well-rounded tapering shape which connects the pipe 4 to a narrower pipe of the exhaust system. The narrower pipe is not depicted in the drawings. The shape of the outlet 3 means that the exhaust gases are here again subject to very little flow resistance.

The particle filter 7 has a larger cross-sectional area than the catalytic cleaner 10 in the plane A depicted in Fig. 2. This means that the exhaust gases pass through the particle filter 7 at a lower velocity than through the catalytic cleaner 10. The flow resistance to the exhaust gases is related to the flow velocity. Owing to the stop surfaces 9, the flow resistance to the exhaust gases is normally greater in the particle filter 7 than in the catalytic cleaner 10. The total flow resistance through the passage can be considerably reduced by lowering the flow velocity through the particle filter 7. Advantageously, the cross-sectional area of the particle filter 7 is about twice that of the catalytic cleaner 10.

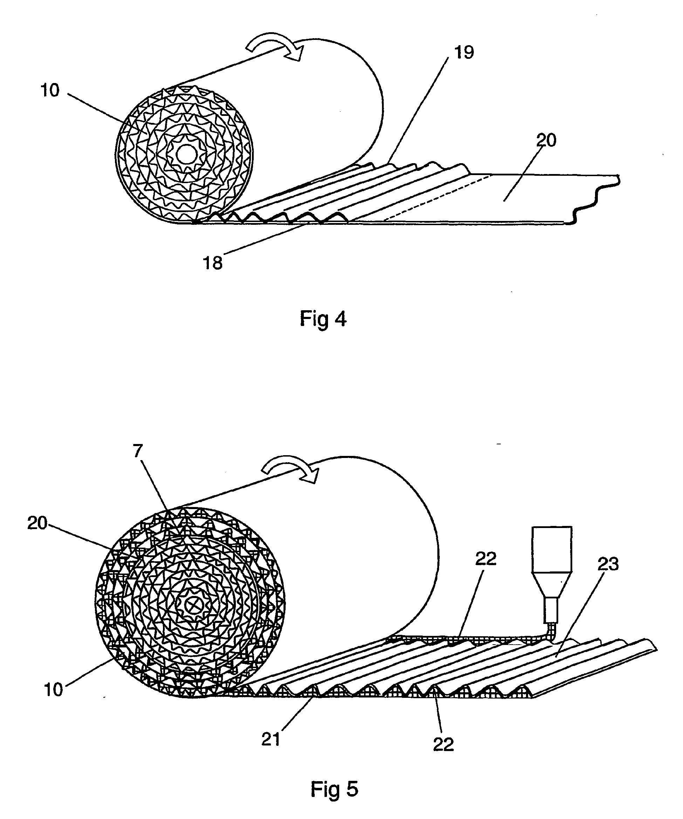

According to the present invention, the particle filter 7 and the catalytic cleaner 10 are so positioned relative to one another in the casing 1 that at least one plane A, perpendicular to said parallel first and second directions 8 and 11 respectively, extends through both the particle filter 7 and the catalytic cleaner 10. Such close mutual positioning of the particle filter 7 and the catalytic cleaner 10 means that according to one alternative of the present invention they can be manufactured so as to form a combined unit. Figs. 4 and 5 depict a combined unit incorporating a particle filter 7 and a catalytic cleaner 10 at first and second stages of manufacture. The catalyst 10 comprises a first elongate strip-shaped material portion 18 incorporating planar surfaces and a second material portion 19 incorporating corrugated surfaces. The second material portion 19 is arranged on top of the first material portion 18, followed by the first and second material portions 18 and 19 respectively being rolled up together in the direction of the arrow. In this case the first material portion 18 is bonded to a third material portion 20 which is intended to form an outer radial seal between the particle filter 7 arranged radially externally and the catalytic cleaner 10. The third material portion 20 may alternatively incorporate the first material portion 18, in which case the latter is made longer than the second material portion 19. Fig. 5 shows a later stage in the manufacturing process. Here a fourth elongate strip-shaped material portion 21 is bonded to the third material portion 20. A bead of pasty material 22 is thereafter arranged on the fourth material portion 21. A fifth corrugated material portion 23 is then arranged over the fourth material portion 21 and the bead of pasty material 22. At this stage the pasty material 22 adapts its shape to the hollow shape between the fourth and fifth material portions 21 and 23 respectively. A second bead of pasty material 22 is arranged on top of the corrugated fifth material portion 23. Thereafter the cylindrically rolled body is rolled further in the direction of the arrow so that the fourth and fifth material portions 21 and 23 respectively are rolled up and grip radially the outside of the catalytic cleaner 10. The beads of pasty material 22 become solidified and form stop surfaces 9 in the elongate ducts formed between the planar surfaces of the fourth material portion 21 and the corrugated surfaces of the fifth material portion 23. Finally, a fastening element is preferably arranged at a suitable position to prevent rolling up of the constituent material portions. The third material portion 20 intended to form a tight radial seal between the particle filter 7 and the catalytic cleaner 10 may be made broad enough to form the centrally situated pipe 4 in the converter 1. Alternatively the third material portion 20 may be suitably bonded to coaxially arranged portions of the pipe 4.

Fig. 6 depicts a converter device design such as to allow the fitting of exhaust cleaning and noise damping components in the form of modules. In the manufacture of vehicles powered by combustion engines with different performances and different emission release requirements, it is a considerable advantage if the converter device can be made of a limited number of modules of different sizes. In that case, the converter device incorporates a basic module 24 comprising about half of the cylindrically shaped casing 1, which half incorporates the first endwall 5 and the whole circular cross-section pipe 4 which in this case is arranged firmly against the first endwall 5. The basic module 24 thus incorporates an annular space between the casing 1 and the pipe 4, and a circular space inside the pipe 4.

In the outer annular space, a first module 25 which incorporates an oxidising catalytic cleaner is arranged. This is followed by arranging in the annular space a second module 26 which incorporates a particle filter 7. In the first module 25 incorporating the catalytic cleaner, the various kinds of nitrogen oxides contained in the exhaust gases are converted to nitrogen dioxide, thereby lowering the soot particle ignition temperature. No burner 14 is usually necessary with a first module 25 which incorporates an oxidising catalytic cleaner. The first module 25 is movable into said annular space until a first side of the module 25 reaches a stop surface 27. Thereafter a metal seal 28 or the like is arranged on the other side of the module 25 so that the sealing is held in the intended position. Thereafter the second module 26 incorporating the particle filter 7 is arranged correspondingly in the annular space. In this situation the metal seal 28 of the first module 25 can act as a stop surface 27 for a first side of the second module 26, followed by a metal seal 28 being arranged against the second side of the second module 26. The capacity of the catalytic cleaner and the particle filter 7 is related to the volume of the respective component. Adaptation to different emission requirements and engine sizes is made possible by first and second modules 25 and 26 respectively, which thus incorporate the catalytic cleaner and the particle filter manufactured in appropriate sizes. The first and second modules 25 and 26 respectively exhibit an identical cross-sectional area in a plane A but a different extent in a direction perpendicular to said plane A. The annular space of the basic module 24 has a depth adapted to accommodating first and second modules 25 and 26 respectively which are dimensioned to maximum sizes.

A third module 29 which incorporates a catalytic cleaner 10 to reduce the amount of nitrogen oxides in the exhaust gases to water and nitrogen gas by means of an added reducing agent is arranged in the circular space inside the pipe 4. In a manner corresponding to that described above, the third module 29 may likewise be manufactured in various sizes which all have an identical circular cross-sectional area in said plane A but a different extent in a direction perpendicular to said plane A. When being fitted in the pipe 4, the third module 29 is pushed in up to a stop surface 27, followed by a metal seal 28 being arranged on the other side of the third module 29.

Thereafter, a fourth module 30 incorporating a noise damping component which has a corresponding annular cross-sectional profile in said plane A is arranged round the protruding pipe 4 of the basic module 24. The third module 30 incorporates two helical profiled sections 12a, b which define two parallel flow paths 13a, b for exhaust gases, which flow paths extend helically round the pipe 4. The sections 12a, b have a radial extent between them and are in this case fastened to an inner wall 31 intended to be arranged round the pipe 4 and an outer wall 32 intended to form part of the casing 1. The fourth module 30 which thus incorporates a noise damping component may also be manufactured to different parameters as regards, for example, the number, length and slope of the helical paths. A connecting region between the casing 1 of the basic module 24 and the outer wall 32 of the fourth module has a shape which allows releasable connection by means of a clamping strap 33. Finally, the second endwall 6 is releasably connectable to the outer wall 32 of the fourth module 30 by a corresponding clamping strap 33. The modules 25, 26, 29, 30 may also incorporate items other than the components mentioned. The modules may for example incorporate a frame which determines the external dimensions of the module and retains the component. The modules may also incorporate wall elements which provide a sealing filling surface in said plane A in cases where the component used does not itself have sufficient cross-sectional area to fill the necessary module cross-section in plane A.

Such construction of the converter device with releasable separable modules also facilitates servicing of the components incorporated in the modules. A regularly recurring operation is that the particle filter 7 has to be emptied of ash once or twice a year. With the converter device of Fig. 6, the first step in doing so is to release the clamping strap 33 which holds the endwall 6 in place. This is followed by releasing the clamping strap 33 retaining the fourth module 30 which incorporates the noise damping component 28 and the basic module 24. The fourth module can then be pulled away from the pipe 4. The second module 26 incorporating the particle filter 7 is thus freed and can be pulled out and emptied of ash. The second module is turned over and refitted in the annular space of the basic module 24. Thereafter the fourth module 30 and the second endwall 6 are refitted by means of the respective clamping straps 33.

The invention is in no way limited to the embodiments described but may be varied freely within the scopes of the claims. For example, the converter device need not have the exhaust gases flowing through it in the direction described. The exhaust gases may alternatively be led first into the pipe 4 via an inlet before being led radially outwards and in an opposite direction on the outside of the pipe 4 to an outlet. In such a case the particle filter 7 is arranged inside the pipe 4, and the catalytic cleaner 10 outside the pipe 4. The casing 1, the exhaust gas cleaning components 7, 10, 25 and the pipe 4 need not necessarily have a circular external shape in said plane A but may be of substantially any functional shape. Likewise, the pipe 4 need not be arranged centrally within the casing 1 but may have substantially any functional positioning.

## Claims

1. A converter device intended to be arranged in an exhaust system for a combustion engine, which converter device comprises an outer casing (1), a passage for leading exhaust gases through the converter device, and at least one exhaust cleaning component (7,10,25,26,29) which is intended to clean exhaust gases as they are led through the passage, **characterised in that** the converter device comprises at least one releasable separable module (25,26,29) which incorporates the exhaust cleaning component (7,10,25,26,29) whereby the module is made in at least two sizes, the various sizes of which module (25, 26, 29, 30) exhibit an identical cross-sectional area in a plane (A) perpendicular to the direction of the exhaust gases through the exhaust cleaning component (7,10,25,26,29) but a different extent in a direction perpendicular to said plane (A).

2. A converter device according to claim 1, **characterised in that** the converter device incorporates a basic module (24) which comprises the tubular body (4) and at least part of the casing (1).

3. A converter device according to claim 2, **characterised in that** the various sizes of the module (25, 26) exhibit a cross-sectional profile which corresponds substantially to a surface which extends in the radial direction between the casing (1) and the tubular body (4) in said plane (A).

4. A converter device according to any one of the foregoing claims, **characterised in that** the various sizes of the module (29) exhibit a cross-sectional profile which corresponds substantially to an internal surface of the tubular body (4) in said plane (A).

5. A converter device according to any one of the foregoing claims, **characterised in that** the module (26) incorporates an exhaust cleaning component in the form of a particle filter (7).

6. A converter device according to any one of the foregoing claims 1-4, **characterised in that** the module (29) incorporates an exhaust cleaning component in the form of a catalytic cleaner (10).

7. A converter device according to claim 6, **characterised in that** the module (25, 26, 29) is arranged movably in a space of the basic module so that a first side of the module (25, 26, 29) comes to abut against a stop surface (27), to be followed by a locking means (28) intended to be arranged on a second side of the module (25, 26, 29).

8. A converter device according to any one of the foregoing claims, **characterised in that** the module (30) incorporates a noise damping component (28) which comprises a helical flow path (13a, b) for the exhaust gases.

9. A converter device according to claim 8, **characterised in that** the noise damping component (28) comprises at least one helical profiled section (12a, b) which has a radial extent between an inner wall (31) which is intended to enclose the tubular body (4) and an outer wall (32) which is intended to form part of the casing (1).

10. A converter device according to any one of the foregoing claims, **characterised in that** the casing (1) comprises at least one endwall (6) which is arranged releasably.

## Patentansprüche

1. Umwandlervorrichtung zur Anordnung in einem Abgassystem für einen Verbrennungsmotor, wobei die Umwandlervorrichtung ein Außengehäuse (1), einen Durchlass zum Führen von Abgasen durch die Umwandlervorrichtung und wenigstens eine abgasreinigende Komponente (7, 10, 25, 26, 29) aufweist, die dazu ausgelegt ist, Abgase zu reinigen, wenn diese durch den Durchlass hindurchgeführt werden,
**dadurch gekennzeichnet, dass** die Umwandlervorrichtung wenigstens ein lösbares abtrennbares Modul (25, 26, 29) aufweist, das die Abgasreinigungskomponente (7, 10, 25, 26, 29) aufweist, wobei das Modul in wenigstens zwei Dimensionierungen vorgesehen ist, wobei die verschiedenen Dimensionierungen von diesem Modul (25, 26, 29, 30) in einer Ebene (A) senkrecht zu der Richtung der Abgase durch die Abgasreinigungskomponente (7, 10, 25, 26, 29) eine identische Querschnittsfläche aufweisen, jedoch in einer Richtung senkrecht zu dieser Ebene (A) unterschiedliche Erstreckung aufweisen.

2. Umwandlervorrichtung nach Anspruch 1,
**dadurch gekennzeichnet, dass** die Umwandlervorrichtung ein Basismodul (24) aufweist, das den rohrförmigen Körper (4) und wenigstens einen Teil des Gehäuses (1) umfasst.

3. Umwandlervorrichtung nach Anspruch 2,
**dadurch gekennzeichnet, dass** die verschiedenen Dimensionierungen des Moduls (25, 26) ein Querschnittsprofil aufweisen, das im Wesentlichen einer Fläche entspricht, die sich in radialer Richtung zwischen dem Gehäuse (1) und dem rohrförmigen Körper (4) in der Ebene (A) erstreckt.

4. Umwandlervorrichtung nach einem der vorangehenden Ansprüche,
**dadurch gekennzeichnet, dass** die verschiedenen Dimensionierungen des Moduls (20) ein Querschnittsprofil aufweisen, das im Wesentlichen einer Innenfläche des rohrförmigen Körpers (4) in der Ebene (A) entspricht.

5. Umwandlervorrichtung nach einem der vorangehenden Ansprüche,
**dadurch gekennzeichnet, dass** das Modul (26) eine als Partikelfilter (7) ausgebildete Abgasreinigungskomponente umfasst.

6. Umwandlervorrichtung nach einem der vorangehenden Ansprüche 1 bis 4,
**dadurch gekennzeichnet, dass** das Modul (29) eine als Katalysator (10) ausgebildete Abgasreinigungskomponente aufweist.

7. Umwandlervorrichtung nach Anspruch 6,
**dadurch gekennzeichnet, dass** das Modul (25, 26, 29) verlagerbar in einem Raum des Basismoduls angeordnet ist, so dass eine erste Seite des Moduls (25, 26, 29) in Anlage mit einer Anschlagfläche (27) kommt, gefolgt von einem Verriegelungsmittel (28), das zur Anordnung an einer zweiten Seiten des Moduls (25, 26, 29) vorgesehen ist.

8. Umwandlervorrichtung nach einem der vorangehenden Ansprüche,
**dadurch gekennzeichnet, dass** das Modul (30) eine schalldämpfende Komponente (28) aufweist, die einen helixförmigen Strömungsweg (13a, b) für die Abgase umfasst.

9. Umwandlervorrichtung nach Anspruch 8,
**dadurch gekennzeichnet, dass** die schalldämpfende Komponente (28) wenigstens einen helixförmig profilierten Abschnitt (12a, b) umfasst, der sich zwischen einer Innenwand (31), die dazu vorgesehen ist, den rohrförmigen Körper (4) zu umgeben, und einer Außenwand (32), die dazu vorgesehen ist, einen Teil des Gehäuses (1) auszubilden, in radialer Richtung erstreckt.

10. Umwandlervorrichtung nach einem der vorangehenden Ansprüche,
**dadurch gekennzeichnet, dass** das Gehäuse (1) wenigstens eine Endwand (6) umfasst, die entfernbar angebracht ist.

## Revendications

1. Convertisseur destiné à être mis en place dans un système d'échappement pour un moteur à combustion interne, lequel convertisseur comprend un carter extérieur (1), un passage pour conduire les gaz d'échappement à travers le convertisseur, et au moins un composant épurateur (7, 10, 25, 26, 29) qui est destiné à épurer les gaz d'échappement au fur et à mesure qu'ils sont conduits à travers le passage, **caractérisé en ce que** le convertisseur comprend au moins un module (25, 26, 29) démontable, pouvant être éliminé, dans lequel le composant épurateur (7, 10, 25, 26, 29) est incorporé, le module étant réalisé en au moins deux tailles, les différentes tailles de ce module (25, 26, 29, 30) présentant une aire identique en coupe transversale dans un plan (A) perpendiculaire à la direction des gaz d'échappement à travers le composant épurateur (7, 10, 25, 26, 29), mais une dimension différente dans une direction perpendiculaire audit plan (A).

2. Convertisseur selon la revendication 1, **caractérisé en ce que** le convertisseur comporte un module de base (24) qui comprend le corps tubulaire (4) et au moins une partie du carter (1).

3. Convertisseur selon la revendication 2, **caractérisé en ce que** les différentes tailles du module (25, 26) présentent un profil en coupe transversale qui correspond sensiblement à une surface s'étendant dans la direction radiale, entre le carter (1) et le corps tubulaire (4), dans ledit plan (A).

4. Convertisseur selon l'une quelconque des revendications précédentes, **caractérisé en ce que** les différentes tailles du module (29) présentent un profil en coupe transversale qui correspond sensiblement à une surface interne du corps tubulaire (4) dans ledit plan (A).

5. Convertisseur selon l'une quelconque des revendications précédentes, **caractérisé en ce que** le module (26) comporte un composant épurateur sous la forme d'un filtre à particules (7).

6. Convertisseur selon l'une quelconque des revendications précédentes 1 à 4, **caractérisé en ce que** le module (29) comporte un composant épurateur sous la forme d'un épurateur catalytique (10).

7. Convertisseur selon la revendication 6, **caractérisé en ce que** le module (25, 26, 29) est mis en place par déplacement dans un espace du module de base d'une façon telle, qu'un premier côté du module (25, 26, 29) vienne se placer en appui contre une surface de butée (27), des moyens de verrouillage (28) destinés ensuite à être mis en place sur un second côté du module (25, 26, 29), étant en outre prévus.

8. Convertisseur selon l'une quelconque des revendications précédentes, **caractérisé en ce que** le module (30) comporte un composant d'insonorisation (28) qui comprend un trajet d'écoulement hélicoïdal (13a, b) pour les gaz d'échappement.

9. Convertisseur selon la revendication 8, **caractérisé en ce que** le composant d'insonorisation (28) comprend au moins une section à profil hélicoïdal (12a, b) qui s'étend en direction radiale entre une paroi intérieure (31), qui est destinée à entourer le corps tubulaire (4), et une paroi extérieure (32) qui est destinée à former une partie du carter (1).

10. Convertisseur selon l'une quelconque des revendications précédentes, **caractérisé en ce que** le carter (1) comprend au moins une paroi d'extrémité (6) qui est mise en place d'une façon amovible.
